# EUROPEAN PATENT SPECIFICATION

(11) **EP 1 382 806 B1**
(45) Date of publication and mention of the grant of the patent: **28.11.2007**
(21) Application number: 03009305.8
(22) Date of filing: 24.04.2003
(51) Int. Cl.: F01K 3/24, F23G 5/02, B09B 3/00, F23G 5/00

(54) **Method and plant for the use of waste material in a thermoelectric power plant**
Verfahren und Anlage zur Verwendung von Abfall in einer thermoelektrischen Kraftwerkanlage
Procédé et installation pour utiliser des déchets dans une centrale thermoelectrique

(30) Priority: 16.07.2002 IT VI20020160
(43) Date of publication of application: 21.01.2004
(73) Proprietor: Sistema Ecodeco S.p.A., 20159 Milano (IT)
(72) Inventor: Donati, Gianni, 27010 Giussago (Pavia) (IT); Natta, Giuseppe, 27010 Giussago (Pavia) (IT)
(74) Representative: Minoja, Fabrizio

(56) References cited:
- EP-A- 0 399 104
- AT-B- 390 304
- DE-A- 4 006 288
- DE-A- 4 442 136
- PATENT ABSTRACTS OF JAPAN vol. 1999, no. 08, 30 June 1999 (1999-06-30) & JP 11 061232 A (DAIDO STEEL CO LTD), 5 March 1999 (1999-03-05)
- PATENT ABSTRACTS OF JAPAN vol. 2000, no. 23, 10 February 2001 (2001-02-10) & JP 2001 173936 A (PLANTEC INC), 29 June 2001 (2001-06-29)

## Description

This invention relates to the field of waste disposal in general, and to a method and a plant for generation of electric energy using solid waste in particular. Such a method and plant are known from document EP-A-0 399 104 for example.

### Prior art

Hereafter, the abbreviation "SW" will be used to refer to solid waste such as that originating from non-selective collection, waste originating from selective collection, fractions containing fermentable material separated from said waste, biomasses originating from *"set-aside"* land, and biomasses contained in refuse or waste originating from other agricultural and/or industrial processes or from purification of effluent containing a fermentable organic fraction.

Known methods use SW, or at least a fraction thereof, to obtain energy, generally electrical energy, which is not necessarily usable in situ and is available for local distribution.

Said methods basically involve combustion of waste, which may be crushed and treated in advance, in a fluidized bed reactor which transfers heat to pressurized water with production of steam that expands in a turbine driving an electrical energy generator in accordance with the known technique in the field.

The main drawback of said known methods is their low thermodynamic efficiency of around 25%, namely approx. 50% of the efficiency of conventional thermal power stations.

Said low efficiency is due to a number of factors, the most important being the size of the incinerating plant, which is relatively small compared with that of thermal power stations. In practice, the quantity of energy obtainable from the waste produced in a given area is one or two orders of magnitude smaller than that consumed in the same area.

Another factor is that waste has a variable energy content, with the result that the legislation requires a huge surplus of combustion air to prevent the production of unburnt material and micropollutants. This excess, together with the need to maintain low steam and high effluent gas temperatures, further reduces the thermodynamic efficiency of the process.

Another factor leading to lower energy efficiency is the heat lost in ash and evaporation of the water contained in the waste, which is discharged in the form of vapor in the flue gases.

Recently, the problem of heterogeneity of waste was tackled in intermediate plants by preparing pre-treated, homogeneous waste which allows better feed of the plant and better control of the combustion process.

When this prepared waste meets certain standards relating to water and ash content and lower heat value, it is called secondary fuel (SF), unconventional fuel, or refuse-derived fuel (RDF). Those terms will be used indiscriminately hereafter to identify the same product.

European patent no. 706839 describes a method for the production of SF with a high net heat value which uses the fermentation heat of the putrescible fraction present in the SW to be treated as energy for the evaporation of water. Fractions with an inorganic base, which produce ash during combustion, are separated. As the weight of the SF thus treated is approx. 50% of the original weight, and its lower heat value is more than twice that of the SW input, a waste preparation process of the type mentioned above makes it possible to concentrate approx. four times the energy contained in the original untreated waste.

It is thus possible to build intelligent transfer stations (ITS) which allow waste to be received locally and its energy concentrated in a SF which can be easily and cheaply transported to centralized electrical energy production plants.

Italian patent no. 1297234 describes a method and an apparatus for the preparation and transport of SF to the end user.

In the case of prepared waste and secondary fuels, the legislation requires combustion with the same process characteristics, in particular with the same air surplus as required for incinerators of unprepared waste, leading to an energy loss at the stack in the form of the sensible heat of the combustion gases. This type of operation, together with the small scale of said plants, leads to very low energy transformation yields (defined as the net quantity of electrical energy produced as a percentage of the total quantity of energy present in the fuel used), generally between 20% and 25%.

Conversely, large thermal power stations have yields close to 40%, even in the absence of combined cycles, ie. with expansion of combustion gases in gas turbines before use in the boiler to produce steam.

The economic advantages of using existing thermal power stations to produce electrical energy from prepared waste or SF are obvious.

However, objective difficulties are posed by direct use in such plants due to their physical nature and the presence of pollutants which are corrosive to the boilers of thermal power stations.

In fact, most thermal power stations do not use solid fuel, but fluid or fluidized materials. Even when coal is used, it is pulverized in advance with mills (that cannot be used for SFs, which have the opposite physical grinding characteristics to coal) and fed to the combustion chamber in the form of fluidized dust.

Moreover, the combustion of secondary fuels produces hydrochloric acid and other inorganic constituents which are corrosive at the operating temperatures of power stations or which cause scaling of steam production boilers. Even when power stations, for example of the type designed to operate with coal, are equipped with systems for the removal of dust and acid compounds, environmental and boiler corrosion limitations still apply.

Methods are also known which recover energy from waste, in particular from treated SW or SFs, by gasification of secondary fuels, in order to obtain a combustible fluid that can be used to feed existing thermal power stations.

The fluid originating from the gasifiers is obtained by partial combustion of the prepared waste or secondary fuel, and contains carbon dioxide, carbon monoxide, light hydrocarbons, heavy pitches, ash and acid products in addition to the nitrogen in the air used. However, purification of this fluid is very difficult. In the case of dry purification, the heavy constituents of the fluid are deposited on the surfaces and clog the filters; in the case of wet purification, difficulties are involved in subsequent purification of the aqueous effluent and disposal of the residues, together with loss of the sensible heat of the fluids obtained.

As a result, currently operating plants merely feed a non-purified fluid to coal-fired power stations equipped with emission treatment systems. This system also fails to deal with the limitations deriving from pollution problems caused by the presence of new pollutants in the flue which were not originally envisaged, and boiler corrosion.

Cheap, reliable systems for purifying the fluid obtained from the gasifiers before its introduction into the combustion chamber of a thermal power station boiler are not currently available because of the difficulty involved in purifying the fluid obtained from gasification, as described above.

### Description of the invention

The main purpose of this invention is to eliminate said drawbacks by providing a method and plant for the use of SW or SF in large thermal power stations able to generate electrical energy simply and cleanly, with high thermodynamic efficiency.

A further purpose is to maximize the electrical energy obtained from SW or residual fractions after separate collection by means of production and combustion of secondary fuel (SF).

Another purpose is to provide a method and plant which enable the thermal energy provided by SW or SF to be recovered in thermal power station boilers in the form of a substantially clean fluid.

A further purpose is to provide a method and plant which allow existing sites to be used to install plants for the production of energy from SW, and in particular from SF.

A further purpose is to provide a method and plant for incineration with cogeneration of electrical energy from waste, prepared waste or secondary fuels which is simple, cheap and easy to run.

These purposes, and others which will be more particularly described below, are achieved by a method for the use of waste, in particular SW, in a thermal power station wherein the primary energy is supplied by combustion of fossil fuels with input of combustion air, as claimed in claim 1.

Said method is characterized in that it includes waste combustion with a suitably controlled air flow so that combustion is approximately complete, cooling of the burnt gases by at least partial mixing with cold air until they reach a pre-determined temperature which is lower than the maximum temperature compatible with gas cleaning, cleaning of the cooled burnt gases, and mixing of said cooled burnt gases with the combustion air used in the power station so as to transfer all their thermal energy content to said combustion air, at the same time preventing the problems of ash deposit and formation of pollutants.

According to a further aspect of the invention, a plant for implementation of said method, as claimed in claim 12, comprises means for the preparation of waste for combustion, means for combustion of the waste in the presence of a controlled air flow regulated to obtain approximately complete combustion of the waste, means for cooling the burnt gas to a temperature lower than the maximum temperature compatible with gas cleaning, means for cleaning said cooled, burnt gases, and means for mixing said cooled burnt gases with the combustion air used in the power station so as to transfer their thermal energy content to said combustion air, at the same time preventing the problems of ash deposit and formation of pollutants.

This method and plant make it possible to fuel a thermal power station with a clean fluid devoid of particulate matter which complies with environmental regulations for flue gases.

Moreover, the method and plant according to the invention considerably increase the efficiency typical of large power stations.

The method and plant according to the invention allow the use of gas-cleaning equipments operating at a relatively low temperature which are already known and tested, and have a relatively low cost. Moreover, total combustion of secondary fuels at a high temperature, with a surplus of air, prevents the production of micropollutants.

Equally, as the waste combustion plant according to the invention does not include the related thermoelectric heat cycle for the production of electrical energy, and is integrated with a large, usually existing combustion plant, the investment involved is far less than that required for a SF combustion plant with production of electrical energy.

The method and plant according to this invention also solve the considerable problems involved in the choice of location of a SF combustion plant, because the plant according to this invention is an auxiliary plant of an existing plant which is 20 to 50 times larger.

### Brief description of drawings

Further characteristics and advantages of the invention will become clear from the following detailed description of a method and plant for the use of SF in thermal power stations, provided by way of example but not of limitation, with the aid of the annexed drawings wherein:
**FIG. 1** is a functional block diagram of a thermal power station in which the primary energy is obtained from combustion of fossil fuels;
**FIG. 2** is a block diagram of the method for the use of waste to be associated with a power station of the type illustrated in FIG. 1;
**FIG. 3** is a functional diagram of the SW combustion plant associated with a thermal power station;
**FIG. 4** is a functional diagram of a SW combustion plant to be associated with a power station;
**FIG. 5** is a functional diagram of a simplified thermal power station;
**FIG. 6** is a functional diagram of the power station shown in FIG. 5 associated with the plant shown in FIG. 4;
**FIG. 7** is a functional diagram of another embodiment of the plant shown in FIG. 3.

### Detailed description of the invention

The annexed figures illustrate a plant for the use of SW according to the invention, globally indicated by the reference number **1**, which can be associated with a thermal power station, globally indicated by reference number **100**, operating either inside it or in an independent unit.

In thermal power station **100**, the primary energy is supplied by the combustion of fossil fuels with air and partial recirculation of combustion gases in order to reduce NOx.

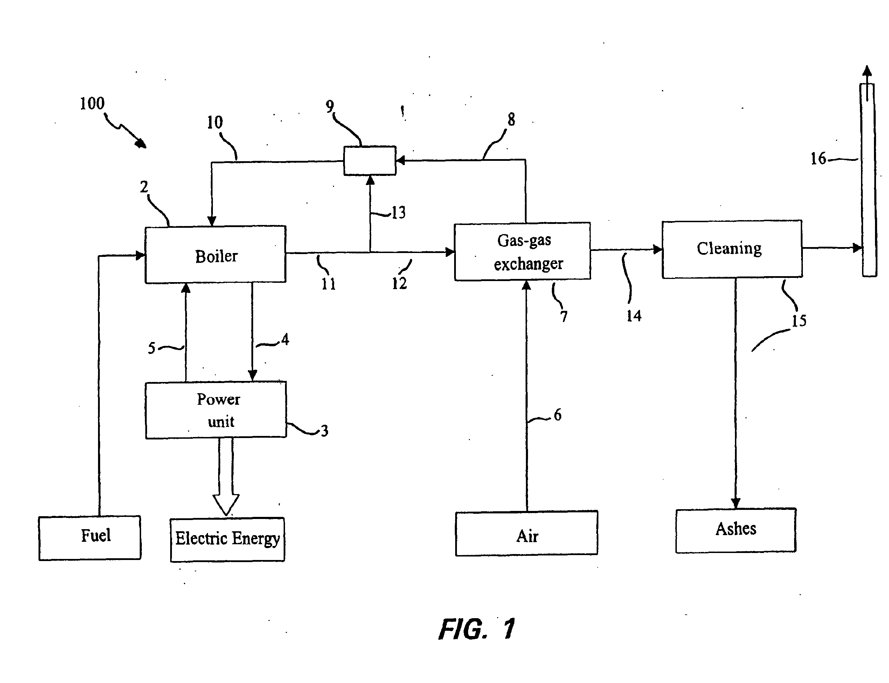

With particular reference to **FIG. 1**, power station **100** can include a boiler unit **2** in which fossil fuels are burned and pressurized steam is produced, a power-generating unit **3** that comprises a turbine in which expansion of steam takes place that drives an alternator for electric energy generation, a line **4** that feeds pressurized steam to generating unit **3**, and a line 5 for the return of condensate to boiler unit **2**.

The combustion air from the environment is conveyed to the combustion system of boiler unit **2**, passing through a line **6**, a gas/gas exchanger **7** where it is preheated by the flue gases to a temperature **Tc**, a line **8**, a mixer **9** where the recycled flow **13** is added, and a line **10**.

The flow of hot gases that exit the boiler **2** after steam generation is conveyed to a pipe or line **11** and then distributed along two more lines **12** and **13**.

By means of line **12**, most of the flow of hot gases passes through gas/gas exchanger **7**, a line **14**, and a dust removal and cleaning system **15**, and is then discharged into the atmosphere through the stack **16**.

Through line **13**, the remainder of the flow of hot gases at high temperature is mixed in mixer **9** with the combustion air preheated by exchanger **7** to temperature **Tc**, and is conveyed through line **10** to the combustion chamber of boiler unit **2**.

As a result of this gas recirculation, the oxygen content of the combustion air is reduced to values close to 18%, so as to limit the adiabatic flame temperature and NOx formation.

In fact, the formation of nitrogen oxides by reaction of atmospheric nitrogen with oxygen is promoted by high temperatures, typically those detected in a flame, and by the oxygen concentration.

Thermal power station **100**, schematically illustrated in **FIG. 1**, may be a standardized unit with a power of 320 MW, which consumes 75000 Nm3/h of natural gas (methane) with a mean conversion efficiency to electricity of nearly 40% on an annual basis, net of internal consumption.

In plants designed to be fuelled with coal or fuel oil, the gases emitted from the steam generation boiler normally have temperatures higher than 350°C to prevent the condensation of sulphuric acid. Gas/gas exchanger **7** consequently plays a crucial role in the efficiency of energy transformation and the reduction of the energy released to the flue in the form of sensible heat, approx. 15-16% of the global energy involved being recovered.

The gases leave the stack **16** at temperatures in the 110-125°C range.

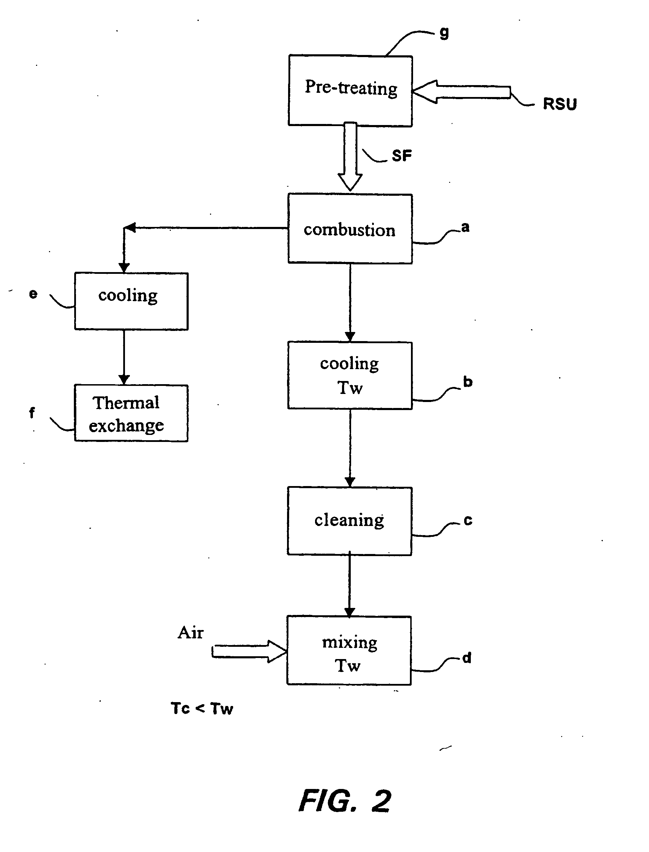

Plant **1** for the use of waste according to the invention, which can operate in association with thermal power station **100**, operates on the basis of the following method, schematically illustrated in **FIG. 2**.

The waste initially undergoes a combustion stage **a)** with a suitably controlled air flow so that combustion is approximately complete.

The burnt gases are then cooled **b)** by at least partial mixing with cold air until they reach pre-determined temperature **Tw**, which is lower than the maximum temperature compatible with the cleaning system.

Subsequently, the cooled burnt gases undergo a cleaning stage **c)**, followed by mixing **d)** with the combustion air used in the power station, so as to transfer the majority of their thermal energy to the combustion air.

Waste combustion will preferably take place without an excess of air, or with a pre-determined air excess.

In particular, the air excess is between 0% and 60% of the stoichiometric ratio. The higher values generally required by local regulations for combustion of waste or secondary fuel, namely 30% to 60%, correspond to temperatures of between 700°C and 900°C.

Total, complete combustion of the type indicated above prevents the formation of organic compounds, typically aromatic polycondensates, which are highly toxic, and only produces inorganic ash.

The burnt gas is cleaned until the content of dust, inorganic acid compounds, condensed polycyclic aromatic compounds and chlorinated organic compounds falls below pre-determined values.

These values correspond to the maximum acceptable values laid down by local environmental regulations for flue gases.

Activated coal dust is added to trap condensed or chlorinated aromatic compounds. As the burnt gases have a relatively low oxygen content, they can at least partly replace the recirculated combustion gases used in power station 100 to reduce NOx formation, as already mentioned.

As SW combustion takes place at fairly high temperatures (between 700°C and 900°C), a cooling stage e) with coolant fluid must be carried out.

Conveniently, the thermal energy of the coolant fluid is provided by means of a suitable heat exchange **f)** to the water recycled to the thermal power station boiler, or another possible form of use.

Alternatively, the burnt gases can be partly cooled in a boiler, not shown in the figures, installed downstream of the waste combustion chamber to generate hot water or superheated steam.

According to the invention, the SW is pre-treated g) to make a secondary fuel SF before its combustion. Conveniently, said pre-treatment or preparation g) can include extraction of the putrescible fraction of the waste, of metals and of aggregates. Advantageously, the putrescible fraction extraction stage comprises a stage of forced aerobic fermentation of the waste with air sucked through it in a closed environment.

This treatment produces a secondary fuel SF with a water content of under 20% in weight, a lower heat value of about 17000 kJ/kg (4000 kcal/kg) of dry matter, and a bacteria count of under 1000 N/g.

According to the invention, plant **1** for implementation of the method of use of SW described above comprises means for preparation of the waste for combustion, means for combustion of the waste in the presence of a controlled air flow regulated to obtain approximately total combustion and to produce a burnt gas, means for cooling the burnt gas to a temperature lower than the maximum temperature compatible with the filters and higher than the minimum temperature of the combustion air of the power station, means for cleaning the mixture of gases, and means for mixing the cleaned burnt gas with the combustion air in the combustion chamber of power station **100**.

The waste preparation means, not shown in the annexed figures, can be constituted by coarse crushing means, means of aerobic fermentation of the putrescible fraction, means for extraction of metals with electrical and/or magnetic fields and sieving means for extracting aggregates.

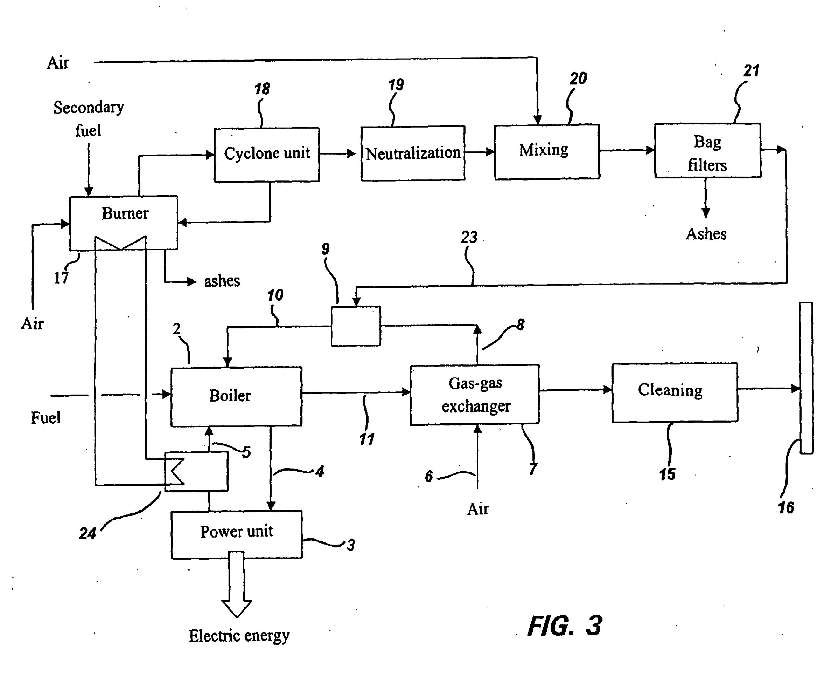

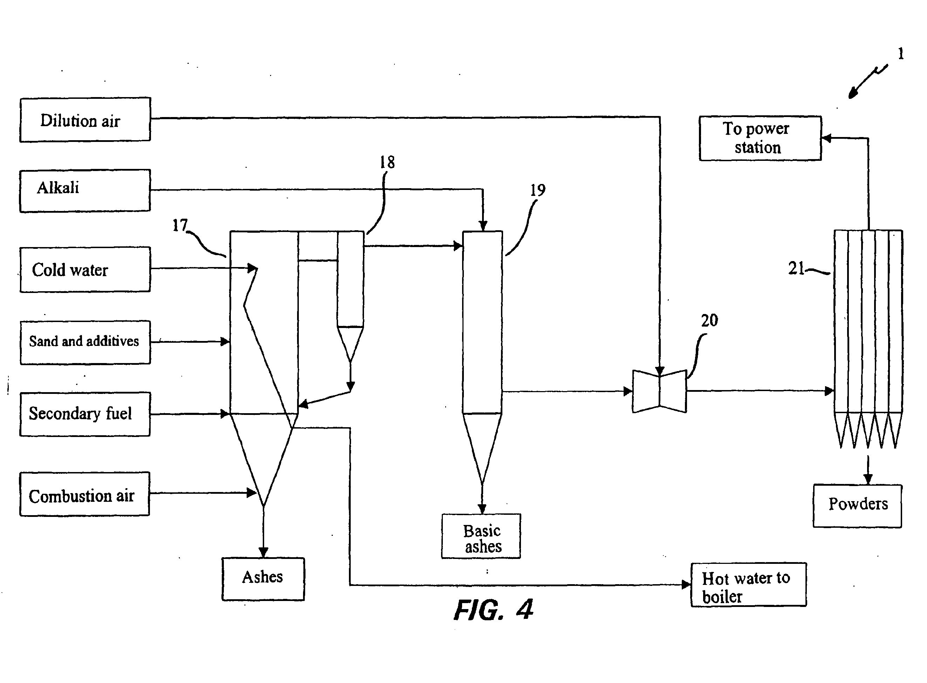

With reference to **FIG. 3 and 4**, the combustion means designed to effect substantially total combustion of the waste comprise a combustion chamber **17**, a cyclone unit **18** and a post-treatment chamber **19**.

Opportunely, combustion chamber **17** can be the fluidised-bed type operating with sand, magnesium carbonate and dolomite at temperatures of between 700°C and 900°C, and preferably close to 850°C, cooled by circulation of a coolant fluid such as pressurized water and steam.

After a first dust removal stage in cyclone unit **18**, the burnt gases can be neutralised in a post-treatment chamber **19** with soda in solution, soda vapor, or magnesium and calcium oxides, to eliminate the sulphur and chlorine not retained in the fluidized bed by the neutralising agents present.

The means for cooling burnt gases comprise a mixer **20** in which the burnt gases are mixed with atmospheric air to produce a mixture of gases that is easy to clean. Temperature **Tw** is reduced to values of between 200°C and 500°C, and preferably close to 430°C.

According to another embodiment not illustrated in the drawings, said cooling means could include an exchanger incorporated in the SF combustion chamber so that burnt gasses are emitted from said combustion chamber at a temperature of between 400 and 850°C, and preferably close to the lowest values required by cleaning, thus reducing the mixing air flow.

The means for cleaning the burnt gases before they are conveyed to thermal power station **100** could be a bag filter **21**. Opportunely, the filtration fabric could be fibreglass able to operate at temperatures of up to 400°C.

Advantageously, activated carbon dust not shown in the annexed figures can be introduced before filtration to adsorb condensed aromatic compounds and chlorinated compounds.

The cleaned burnt gas thus obtained is low in oxygen, devoid of particular matter, inorganic acid compounds and low-boiling organic compounds, and complies with environmental regulations for flue emissions.

The means of introducing cleaned burnt gas as part of the combustion gas into the combustion chamber of boiler **2** of power station **100**, regulated to at least partly replace combustion burnt gases recycle to reduce NOx, comprise a line **23** whereby the cleaned burnt gas is conveyed to the thermal power station and a mixer **9** in which it is combined with the preheated combustion air in gas/gas exchanger **7**.

As this gas is produced by combustion, it is low in oxygen and can perform the function of limiting the adiabatic flame temperature in a similar way to partial recycling of the products of combustion, as schematically illustrated in **FIG. 1**.

Opportunely, the pressurized hot fluid obtained from fluidized-bed cooling circuit **17** could be used to preheat the water **5** recycled to boiler unit **2** of the thermal power station by means of a suitable exchanger **24**.

The usable quantity of SF is limited by the fact that the quantity of oxygen in the combustion air at the combustion chamber of boiler **2** of the thermal production line must be close to 18%, and its temperature under 400°C.

If all the energy used to heat the combustion air is supplied by SF, with the constraints referred to above, the quantity of energy supplied ranges between 3 and 10% of the electrical energy produced, depending on the technology of the power station in which the invention is used.

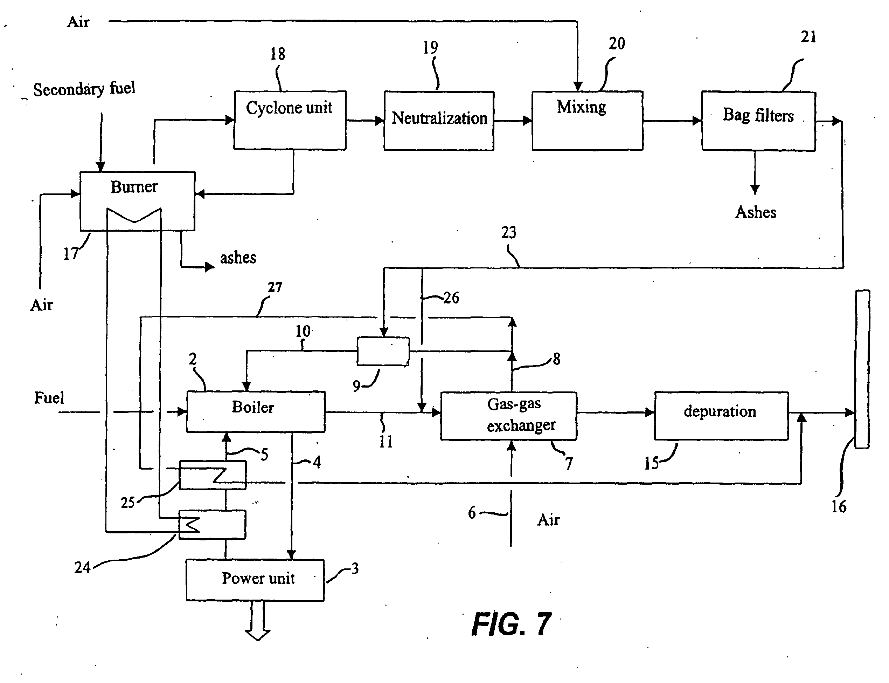

With reference to the embodiment illustrated in **FIG. 7**, the flow of cleaned burnt gas sent via line **23** is divided into a flow sent to mixer **9** and a flow sent via line **26** to line **11** prior to gas/gas exchanger **7**. In this case, the production of cleaned burnt gas will be higher than in the case of mixing with combustion air for combustion in boiler unit **2** of thermal power station **100**, without disturbing its operation, for example during operation at a reduced load due to lower energy demand from the network at night or on non-working days, or due to the need to dispose of a larger amount of waste.

The air preheated in exchanger **7** which is surplus to combustion needs in boiler unit **2** is sent via line **27** to an exchanger **25** for further heating of the water recycle to boiler **2**, and subsequently to the stack **16**.

Cleaning operations by means of adsorption on activated carbon, neutralization of inorganic acidity with the alkalis and dust filtration, mentioned above are well known to one skilled in the art, and have been thoroughly tried and tested in waste incineration plants.

Neutralization of inorganic acidity is described, for example, in EP 777208.

Some embodiments of plants according to the invention, installed in thermal power stations operating with various fossil fuels, are set out below.

### EXAMPLE 1

As shown in **FIG. 3**, a plant for the combustion of secondary fuel which is able to burn 13 t/h of secondary fuel with production after air dilution and filtration of approx. 258 t/h of cleaned burnt gas at the temperature of 430°C and with an oxygen concentration of around 14% is interconnected with the 320 Mw line of a thermal power station also designed to be fuelled by coal or fuel oil.

The power station has boilers operating with exit combustion gasses at 360°C, a gas/gas exchanger, for example of the Ljungstrom type, and an electrostatic filter before the gasses are conveyed to the stack at 120°C, operating with partial recycling of hot gases from the output of the boiler to the burners, with the primary purpose of reducing the flame temperature and preventing NOx formation, and the secondary purpose of heat recovery.

The gases thus produced, at high temperature and with a low oxygen content, perform the same functions as recirculated gas, and also represent a net output of approx.1,21 10⁸ kJ/h (2.9 10⁷ kcal/h).

Advantageously, the burnt gases can therefore be inserted, via mixer **9**, into line **10** of the preheated combustion air originating from gas/gas exchanger **7** to increase the temperature and reduce the oxygen content at the burners, without unbalancing the performance of the boiler and exchanger **7**.

A reduction of approx. 22% in the incoming air flow and 15% in the flow rate of the gases to the stack is therefore achieved, while maintaining the constraints of 2% in weight of the oxygen in the gases and not significantly varying the adiabatic flame temperatures at the burners. Opportunely, the pressurized hot water or steam obtained from the cooling circuit of the fluidized-bed combustion chamber is used to preheat the water recirculated to the boiler unit of the thermal power station by means of a suitable exchanger with a net output of approx.7.15 10⁷ kJ/h (1.7 10⁷ kcal/h).

In the case of use of natural gas, consumption is reduced by approx. 6% from 75000 Nm³/h to 70300 Nm³/h, with the same electrical energy production, a contribution of approx. 20 MW being made by external heat. The electrical energy production per kg of secondary fuel is approx. 1.5 kWh/kg.

A secondary fuel combustion plant with production of electrical energy according to the known technique and a nominal capacity of 7,5 t/h of secondary fuel (the typical capacity of a waste incineration line) can produce 8.1 MW, approx. 1.1 MW of which is consumed for the operation of the plant, with specific consumption of 1.08 kW per kg of secondary fuel.

The value of 1.5 kWh/kg described above for a SF combustion plant interconnected to a thermal power station increases the efficiency to almost 40%.

This surprising result is due to the different efficiencies of the heat cycles of the two plants

Moreover, the investment required for construction of the secondary fuel combustion plant and treatment of the corresponding burnt gasses alone is less the cost of a complete plant designed according to the known technique, which includes a steam production boiler, turbine, alternator, and a stack.

### EXAMPLE 2

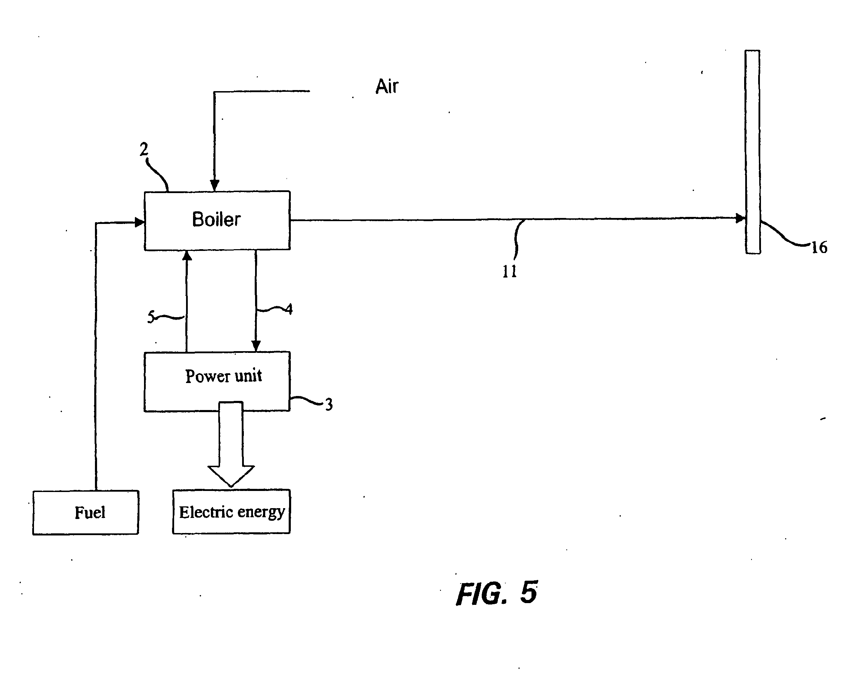

**FIG. 5** is a functional diagram of a 320 MW thermal power station, designed to be fuelled with natural gas only, without air pre heating and with boiler exit gases at 120°C.

The mass and energy balance in principle provides the same natural gas consumption as in the previous example.

However, the potential of the invention can be exploited better in this case, where there are no constraints deriving from gas recirculation and heat recovery from the gases before they are discharged into the atmosphere.

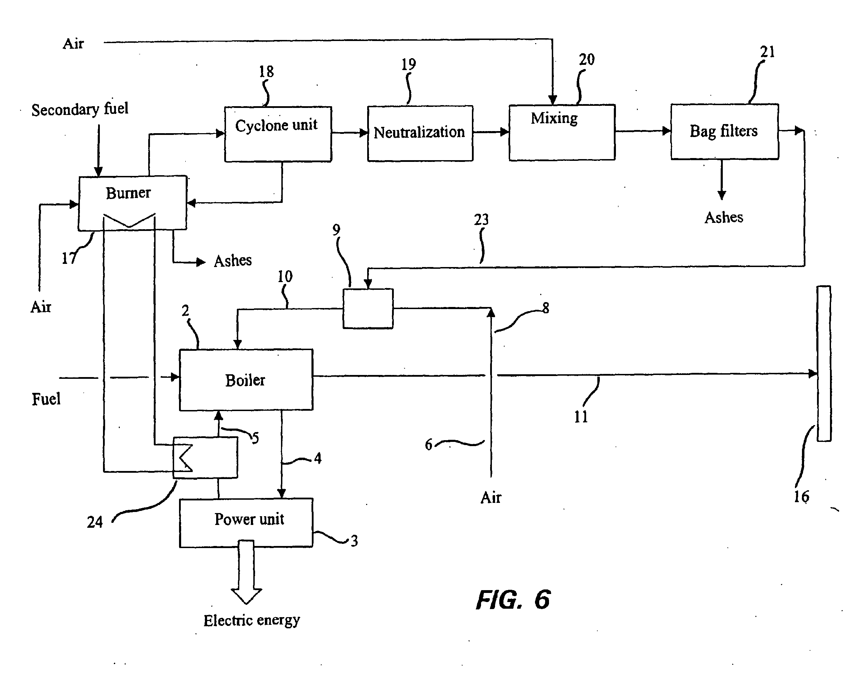

**FIG. 6** is a block diagram of the two integrated processes.

Using a plant able to burn 26 t/h of SF, approx. 500 t/h of burnt gas are produced at a temperature of approx. 430°C and cleaned of particulate matter and other pollutants to values less than the maximum acceptable for stack emission.

The addition of these gases to the combustion air reduces the oxygen concentration to 17-18% and allows a reduction of the adiabatic combustion temperature to approx. 1900°C, which is less favourable to the formation of nitrogen oxides.

The natural gas consumption falls from 75000 Nm³/h to 65000 Nm³/h with a saving of about 10000 Nm³/h, equal to approx. 13% of the value of the thermal power station operating alone.

Specific energy production is therefore 1.6 kW/kg of secondary fuel, as against 1.08 kW/kg in the case of a stand alone waste to energy plant.

### EXAMPLE 3

**FIG. 7** is a functional diagram of a SF combustion plant able to burn 26 t/h, with production of approx. 500 t/h of burnt gases cleaned at the temperature of 430°C, with a 14% oxygen concentration, combined to a thermal power station as described in example 1.

Part of said burnt gas, approx. 300 t/h, can be added via mixer **9** to line 10 of the preheated combustion air originating from gas/gas exchanger **7** to increase the temperature and reduce the oxygen content at the burners without unbalancing the performance of the boiler. The remainder of the burnt gas is sent directly to gas/gas exchanger **7**. The surplus preheated air in said exchanger, approx. 235 t/h, can be used for further preheating of the recirculation water in a suitable exchanger **25**, and subsequently conveyed to the stack together with the burnt gases.

The natural gas saving and the production of electrical energy per kg of secondary fuel are similar to those set out in Example 2.

As will be clear from the above description, the method and plant according to the invention solve the problem of dispersed energy due to the surplus air required by combustion of secondary fuels, as this air is subsequently used as combustion air for fossil fuels in which this surplus is not required.

Moreover, unlike the situation with known gasifiers, gas cleaning performed by the method and with the plant according to the invention does not produce residues containing organic material, including the dangerous aromatic polycondensates and dioxins, which are difficult and expensive to dispose of, but inorganic ash identical to that produced by perfect combustion plants.

Elimination of all the compounds containing chlorine and other low-melting salts before entering the power station boiler, allows the use of the temperatures commonly employed in thermal power stations, which are much higher than those used in incinerators, which are limited by problems of corrosion, and therefore allows the use of high-yield heat cycles.

The use of heat cycles with a scale up to 50 times higher represents a further contribution to the yield, which is much higher in total than that of a dedicated plant that uses the same amount of secondary fuel, while the investment involved is less than that required to produce electrical energy from the same secondary fuels in dedicated plants.

A further advantage is that it is unnecessary to obtain new sites for waste incinerators; the invention solves the problem of locating such plants, which can be replaced by relatively small auxiliary plants located on the site of existing thermal power stations.

According to current legislation of some EU Countries (e.g. Italy), which tends to encourage the use of renewable energy production sources, when the proportion of production from this type of source in a plant exceeds 4%, the plant can be classed as a user of renewable sources with a considerable favourable impact on the environment.

As approx. 50% of secondary fuel consists of materials classified as renewable for energy purposes, thermal power stations which can produce at least 4% of their energy with such sources are classed as users of renewable sources, and authorized to issue the corresponding certificate.

## Claims

1. Method for the use of waste, in particular solid waste, in a thermal power station (100) wherein the primary energy is supplied by combustion of fossil fuels with input of combustion air, which said method comprises combustion (a) of the waste with an air flow suitably controlled so that combustion is approximately complete, cooling (b) of the burnt gases by means of at least partial mixing with cold air to a pre-determined temperature (Tw) which is lower than the maximum temperature compatible with gas cleaning, cleaning (c) of the cooled burnt gases, and mixing of said cooled, cleaned burnt gases with the combustion air used in the power station so as to transfer a part of the thermal energy generated by waste combustion to said combustion air.

2. Method as claimed in claim 1, **characterised in that** combustion (a) of the waste takes place without an excess of air or with a pre-determined excess of air.

3. Method as claimed in claim 2, **characterized in that** said pre-determined air surplus falls into the range of approximately 0-60% of the stoichiometric value..

4. Method as claimed in claim 1, **characterized in that** said cleaning (c) of the burnt gas is performed by filtration.

5. Method as claimed in claim 1, **characterized in that** the cooled, cleaned burnt gases are mixed with the combustion air used in the power station so as to at least partly replace recirculation of combustion burnt gases in the power station to reduce NOx.

6. Method as claimed in claim 1, **characterized in that** said burnt gas cleaning stage (c) is performed until the content of powders, inorganic acid compounds, condensed polycyclic aromatic compounds and chlorinated organic compounds falls below pre-determined threshold values.

7. Method as claimed in claim 1, **characterized in that** it includes cooling (e) of the waste combustion bed by means of a coolant fluid, at least part of the thermal energy of said coolant fluid being transferred (f) to the fluid preheating circuit of the power station so that substantially all the energy obtained from waste combustion is transferred to the power station.

8. Method as claimed in claim 1, **characterized in that** the waste undergoes a preliminary treatment (g) before combustion so as to prepare a secondary fuel (SF).

9. Method as claimed in claim 8, **characterized in that** the pre-treatment (g) of said secondary fuel (SF) comprises a stage of forced aerobic fermentation of the waste.

10. Method as claimed in claim 8, **characterized in that** pre-treatment (g) of said secondary fuel (SF) comprises at least a stage of extraction of metals and/or aggregates from the waste.

11. Method as claimed in claim 8, **characterized in that** after preparation, said secondary fuel (SF) has a moisture content of less than 20% in weight, a net heat value exceeding 17000 kJ/kg (4000 kcal/kg), and a bacteria count of under 1000 N/g.

12. Plant for the use of waste in a thermal power station (100), which implements the method as claimed in one or more of the preceding claims, wherein said power station (100) is equipped with a primary combustion chamber (2) for fossil fuels and a circuit that feeds combustion air to said combustion chamber (2) at a pre-determined temperature (**Tc**), which plant includes:
- means for preparation of the waste for combustion;
- means (17) for combustion of the waste in the presence of a controlled air flow designed to effect approximately complete combustion of the waste;
- means (20) for cooling burnt gases to a temperature (Tw) lower than the maximum temperature compatible with means for cleaning said cooked burnt gases;
- means (21) for cleaning said cooled burnt gases;
- means (9) for mixing said cooled, cleaned burnt gases with the combustion air used in the power station, so as to transfer their thermal energy, generated by waste combustion, to said combustion air,

13. Plant for the use of waste as claimed in claim 12, **characterized in that** said waste combustion means (17) include at least one fluidized-bed combustion reactor equipped with a cooling circuit that uses a coolant fluid.

14. Plant for the use of waste as claimed in claim 13, **characterized in that** the coolant fluid of said cooling circuit constitutes the primary fluid of a heat exchanger (24) designed to preheat the fluid recycle to the power station boiler, so as to transfer substantially all the energy obtained from waste combustion to power station (100).

15. Plant as claimed in claim 13, **characterized in that** it includes means for feeding air to said fluidized-bed combustion reactor, which said means can be regulated to vary the air excess within a range of approximately 0-60% of the stachiomatric value.

16. Plant as claimed in claim 12, **characterized in that** said means (9) of mixing the cooled, cleaned burnt gases with the combustion air used in the main combustion chamber of the power station are designed to replace, at least partly, recirculation of combustion gases for the purpose of NOx reduction.

17. Plant as claimed in claim 12, **characterized in that** said cleaning means (21) include filtration means.

18. Plant as claimed in claim 12, **characterized in that** said waste preparation means include means for preparation of secondary fuel (SF) from said waste.

19. Plant as claimed in claim 17, **characterized in that** said means for the preparation of said secondary fuel include a plant for forced aerobic fermentation of said waste.

## Patentansprüche

1. Verfahren für die Verwendung von Abfall, insbesondere festem Abfall in einem thermischen Kraftwerk (100), wobei die Primärenergie durch Verbrennung fossiler Brennstoffe mit Eingabe von Verbrennungsluft geliefert wird, welches Verfahren umfasst: die Verbrennung (a) des Abfalls mit einem Luftstrom, der auf geeignete Weise gesteuert ist, so dass die Verbrennung nahezu vollständig ist, die Kühlung (b) der Abgase durch zumindest teilweises Vermischen mit kalter Luft auf eine vorbestimmte Temperatur (Tw), welche niedriger ist als die maximale, mit der Gasreinigung kompatible Temperatur ist, die Reinigung (c) der gekühlten Abgase, und das Mischen der gekühlten, gereinigten Abgase mit der in dem Kraftwerk verwendeten Verbrennungsluft, um einen Teil der durch die Abfallverbrennung erzeugten thermischen Energie an die Verbrennungsluft zu übertragen.

2. Verfahren nach Anspruch 1, **dadurch gekennzeichnet, dass** die Verbrennung (a) des Abfalls ohne einen Überschuss an Luft oder mit einem vorbestimmten Überschuss an Luft stattfindet.

3. Verfahren nach Anspruch 2, **dadurch gekennzeichnet, dass** der vorbestimmte Luftüberschuss in den Bereich von ungefähr 0 - 60 % des stöchiometrischen Werts fällt.

4. Verfahren nach Anspruch 1, **dadurch gekennzeichnet, dass** die Reinigung (c) des Abgases durch Filtration erfolgt.

5. Verfahren nach Anspruch 1, **dadurch gekennzeichnet, dass** die gekühlten, gereinigten Abgase mit der in dem Kraftwerk verwendeten Verbrennungsluft vermischt werden, um die Rezirkulation der Verbrennungsabgase in dem Kraftwerk zumindest zum Teil zu ersetzen, um NOx zu reduzieren.

6. Verfahren nach Anspruch 1, **dadurch gekennzeichnet, dass** die Reinigungsstufe (c) für die Abgase durchgeführt wird, bis der Gehalt an Stäuben, anorganischen Säureverbindungen, kondensierten polyzyklischen aromatischen Verbindungen und chlorierten organischen Verbindungen unter vorbestimmte Schwellenwerte fällt.

7. Verfahren nach Anspruch 1, **dadurch gekennzeichnet, dass** es die Kühlung (e) des Abfallverbrennungsbetts mittels eines Kühlfluids umfasst, wobei zumindest ein Teil der thermischen Energie des Kühlfluids an den Fluidvorwärmkreis des Kraftwerks übertragen (f) wird, so dass im Wesentlichen die gesamte aus der Abfallverbrennung erhaltene Energie an das Kraftwerk übertragen wird.

8. Verfahren nach Anspruch 1, **dadurch gekennzeichnet, dass** der Abfall eine Vorbehandlung (g) vor der Verbrennung durchläuft, um einen Sekundärbrennstoff (SF) zu bereiten.

9. Verfahren nach Anspruch 8, **dadurch gekennzeichnet, dass** die Vorbehandlung (g) des Sekundärbrennstoffs (SF) eine Stufe der erzwungenen aeroben Fermentation des Abfalls umfasst.

10. Verfahren nach Anspruch 8, **dadurch gekennzeichnet, dass** die Vorbehandlung (g) des Sekundärbrennstoffs (SF) zumindest eine Stufe der Extraktion von Metallen und/oder Aggregaten aus dem Abfall umfasst.

11. Verfahren nach Anspruch 8, **dadurch gekennzeichnet, dass** der Sekundärbrennstoff (SF) nach seiner Herstellung einen Feuchtigkeitsgehalt von weniger als 20 Gew.-%, einen Nettoheizwert von über 17000 kJ/kg (4000 kcal/kg), und eine Bakterienzählung von unter 1000 N/g aufweist.

12. Anlage für die Verwendung von Abfall in einem thermischen Kraftwerk (100), welche das Verfahren nach einem oder mehreren der vorhergehenden Ansprüche implementiert, wobei das Kraftwerk (100) mit einer primären Verbrennungskammer (2) für fossile Brennstoffe und einem Kreis, der Verbrennungsluft in die Verbrennungskammer (2) bei einer vorbestimmten Temperatur (Tc) einspeist, ausgestattet ist, wobei die Anlage umfasst:
- Mittel zur Vorbereitung des Abfalls für die Verbrennung;
- Mittel (17) zur Verbrennung des Abfalls in der Gegenwart eines geregelten Luftstroms, dafür bestimmt, dass eine nahezu vollständige Verbrennung des Abfalls zu bewirken;
- Mittel (20) zur Kühlung der Abgase auf eine Temperatur (Tw) unter der maximalen Temperatur, die mit den Mitteln zur Reinigung der abgekühlten Abgase kompatibel ist;
- Mittel (21) zur Reinigung der abgekühlten Abgase;
- Mittel (9) zum Mischen der gekühlten, gereinigten Abgase mit der in dem Kraftwerk verwendeten Verbrennungsluft, um deren thermische Energie, die durch die Abfallverbrennung erzeugt wird, an die Verbrennungsluft zu übertragen.

13. Anlage für die Verwendung von Abfall nach Anspruch 12, **dadurch gekennzeichnet, dass** die Abfallverbrennungsmittel (17) zumindest einen Wirbelschicht-Verbrennungsreaktor umfassen, der mit einem ein Kühlfluid verwendenden Kühlkreis ausgestattet ist.

14. Anlage für die Verwendung von Abfall nach Anspruch 13, **dadurch gekennzeichnet, dass** das Kühlfluid des Kühlkreises das primäre Fluid eines Wärmetauschers (24) darstellt, der so konstruiert ist, um den Fluidrücklauf zu dem Kessel des Kraftwerks vorzuwärmen, um im Wesentlichen die gesamte aus der Abfallverbrennung erhaltene Energie an das Kraftwerk (100) zu übertragen.

15. Anlage nach Anspruch 13, **dadurch gekennzeichnet, dass** sie Mittel zum Einspeisen von Luft in den Wirbelschicht-Verbrennungsreaktor einschließt, welche Mittel geregelt werden können, um den Luftüberschuss innerhalb eines Bereichs von ungefähr 0 - 60 % des stöchiometrischen Werts zu variieren.

16. Anlage nach Anspruch 12, **dadurch gekennzeichnet, dass** die Mittel (9) zur Mischung der gekühlten, gereinigten Abgase mit der in der Hauptverbrennungskammer des Kraftwerks verwendeten Verbrennungsluft so ausgelegt sind, dass sie zumindest zum Teil die Rezirkulation von Verbrennungsgasen zum Zweck der NOx-Reduktion ersetzen.

17. Anlage nach Anspruch 12, **dadurch gekennzeichnet, dass** die Reinigungsmittel (21) Filtrationsmittel einschließen.

18. Anlage nach Anspruch 12, **dadurch gekennzeichnet, dass** die Abfallvorbereitungsmittel Mittel zur Herstellung von Sekundärbrennstoff (SF) aus dem Abfall einschließen.

19. Anlage nach Anspruch 17, **dadurch gekennzeichnet, dass** die Mittel für die Herstellung des Sekundärbrennstoffs eine Anlage für die erzwungene aerobe Fermentation des Abfalls einschließen.

## Revendications

1. Procédé d'exploitation des déchets, en particulier de déchets solides, dans une centrale thermique (100) dans laquelle l'énergie primaire est fournie par la combustion de combustibles fossiles avec introduction d'air de combustion, lequel dit procédé comprend la combustion (a) des déchets avec un flux d'air adéquatement régulé de telle sorte que la combustion soit approximativement complète, le refroidissement (b) des gaz brûlés au moyen d'au moins le mélange partiel à de l'air froid à une température prédéterminée (Tw) qui est inférieure à la température maximale compatible avec l'épuration des gaz, l'épuration (c) des gaz brûlés refroidis et le mélange desdits gaz brûlés épurés et refroidis avec l'air de combustion utilisé dans la centrale de manière à transférer une partie de l'énergie thermique générée par la combustion des déchets vers ledit air de combustion.

2. Procédé selon la revendication 1, **caractérisé en ce que** la combustion (a) des déchets se fait sans un excès d'air ou avec un excès d'air prédéterminé.

3. Procédé selon la revendication 2, **caractérisé en ce que** ledit surplus d'air prédéterminé se situe dans une fourchette approximativement comprise entre 0 à 60% de la valeur stoechiométrique.

4. Procédé selon la revendication 1, **caractérisé en ce que** ladite épuration (c) du gaz brûlé est réalisée par filtration.

5. Procédé selon la revendication 1, **caractérisé en ce que** les gaz brûlés épurés et refroidis sont mélangés à l'air de combustion utilisé dans la centrale de manière à remplacer au moins en partie le recyclage des gaz de combustion brûlés dans la centrale afin de réduire le NOx.

6. Procédé selon la revendication 1, **caractérisé en ce que** ladite étape d'épuration des gaz brûlés (c) est réalisée jusqu'à ce que la teneur en poudres, composés acides inorganiques, composés aromatiques polycycliques condensés et composés organiques chlorés se situe en dessous de valeurs seuil prédéterminées.

7. Procédé selon la revendication 1, **caractérisé en ce qu'**il comprend le refroidissement (e) du lit de combustion des déchets au moyen d'un liquide réfrigérant, au moins une partie de l'énergie thermique dudit liquide réfrigérant étant transférée (f) vers le circuit de préchauffage du liquide de la centrale de telle sorte que, pour l'essentiel, toute l'énergie obtenue à partir de la combustion des déchets soit transférée vers la centrale.

8. Procédé selon la revendication 1, **caractérisé en ce que** les déchets sont soumis à un traitement préliminaire (g) avant la combustion de manière à fabriquer un combustible secondaire (CS).

9. Procédé selon la revendication 8, **caractérisé en ce que** le prétraitement (g) dudit combustible secondaire (CS) comprend une étape de fermentation aérobie forcée des déchets.

10. Procédé selon la revendication 8, **caractérisé en ce que** le prétraitement (g) dudit combustible secondaire (CS) comprend au moins une étape d'extraction des métaux et/ou des agrégats à partir des déchets.

11. Procédé selon la revendication 8, **caractérisé en ce que**, après la fabrication, ledit combustible secondaire (CS) présente une teneur en humidité inférieure à 20% en poids, une valeur calorifique nette dépassant 17000 kJ/kg (4000 kcal/kg) et un nombre de bactéries inférieur à 1000 N/g.

12. Installation d'exploitation des déchets dans une centrale thermique (100) qui met en oeuvre le procédé revendiqué dans l'une quelconque ou plusieurs des revendications précédentes, dans laquelle ladite centrale (100) est équipée d'une chambre à combustion primaire (2) pour combustibles fossiles et d'un circuit qui amène l'air de combustion vers ladite chambre de combustion (2) à une température prédéterminée (Tc), qui comprend :
- des moyens de préparation des déchets pour la combustion,
- des moyens (17) de combustion des déchets en présence d'un flux d'air régulé conçu pour effectuer la combustion approximativement complète des déchets,
- des moyens (20) de refroidissement des gaz brûlés à une température (Tw) inférieure à la température maximale compatible avec les moyens d'épuration desdits gaz brûlés refroidis,
- des moyens (21) d'épuration desdits gaz brûlés refroidis,
- des moyens (9) de mélange desdits gaz brûlés épurés et refroidis à l'air de combustion utilisé dans la centrale de manière à transférer son énergie thermique, générée par la combustion des déchets, vers ledit air de combustion.

13. Installation d'exploitation des déchets selon la revendication 12, **caractérisée en ce que** lesdits moyens de combustion des déchets (17) comprennent au moins un réacteur à combustion avec lit fluidisé équipé d'un circuit de refroidissement qui emploie un liquide réfrigérant.

14. Installation d'exploitation des déchets selon la revendication 13, **caractérisée en ce que** le liquide réfrigérant dudit circuit de refroidissement constitue le liquide primaire d'un échangeur thermique (24) conçu pour préchauffer le recyclage du liquide vers la chaudière de la centrale de manière à transférer pour l'essentiel toute l'énergie, obtenue à partir de la combustion des déchets, vers la centrale (100).

15. Installation selon la revendication 13, **caractérisée en ce qu'**elle comprend des moyens d'amenée de l'air vers ledit réacteur à combustion avec lit fluidisé, lesquels dits moyens peuvent être réglés de manière à moduler l'excès d'air dans une fourchette approximativement comprise entre 0 et 60% de la valeur stoechiométrique.

16. Installation selon la revendication 12, **caractérisée en ce que** lesdits moyens (9) de mélange des gaz brûlés épurés et refroidis à l'air de combustion utilisé dans la chambre à combustion principale de la centrale sont conçus pour remplacer, au moins en partie, le recyclage des gaz de combustion dans le but de réduire le NOx.

17. Installation selon la revendication 12, **caractérisée en ce que** lesdits moyens d'épuration (21) comprennent des moyens de filtration.

18. Installation selon la revendication 12, **caractérisée en ce que** lesdits moyens de préparation des déchets comprennent des moyens de fabrication d'un combustible secondaire (CS) à partir desdits déchets.

19. Installation selon la revendication 17, **caractérisée en ce que** lesdits moyens de préparation dudit carburant secondaire comprennent une installation de fermentation aérobie forcée desdits déchets.
